# EUROPEAN PATENT SPECIFICATION

(11) **EP 0 867 356 B1**
(45) Date of publication and mention of the grant of the patent: **10.11.2004**
(21) Application number: 98200416.0
(22) Date of filing: 10.02.1998
(51) Int. Cl.: B62D 55/21

(54) **A method of manufacturing an openable link of a track**
Verfahren zur Herstellung eines Verbindungsgliedes für Gleisketten
Procédé de fabrication d'élément de liaison pour chenille

(30) Priority: 28.03.1997 IT MI970739
(43) Date of publication of application: 30.09.1998
(73) Proprietor: D'ALPE S.a.s. Consulenze Industriali dell'Ing. Enzo Duse & C., Bologna (IT)
(72) Inventor: Duse, Enzo, 40130 Bologna (IT)
(74) Representative: Siniscalco, Fabio

(56) References cited:
- EP-A- 0 603 534
- DE-A- 2 844 107

## Description

The present invention relates to a method of manufacturing connecting links which can be juxtaposed along a predetermined profile to form an openable link for joining a chain of links into a closed loop to form a track for tractors and the like, as for example described in DE 28 44 107 A, according to which the preamble of claims 1, 4 and 5 is established.

As is known, tracks for tractors and the like are produced by closing a chain of links articulated to one another or, more precisely, hinged to one another by means of pins, into a loop.

Chains have for some time been joined to form closed loops according to a known technique by the insertion and removal of a pin between the two links at the ends of the open chain. However, this method is very laborious with manual assembly and disassembly and, moreover, is not very reliable because the pin has to be driven into the links by force. Moreover, this method cannot be used for lubricated chain links owing to the presence of a predetermined quantity of lubricant fluid in the pin and owing to the presence of lubrication ducts.

At the moment, the chain of links is therefore joined into a closed loop by means of an openable link formed by two connecting links which are juxtaposed and joined together by suitable connection means. Although this method is satisfactory from various points of view and is widely used, it leaves something to be desired from the manufacturing point of view. In fact the manufacture of a track of this type and, in particular, the manufacture of the openable link, requires the provision of specific and expensive tooling, operating in accordance with a complex working cycle.

The problem upon which the present invention is based is that of providing a method of manufacture of the type specified which overcomes the problems mentioned with reference to the prior art.

This problem is solved by a method of manufacture of the type specified which is characterized in that it comprises the steps of providing a forging of the openable link and cutting the forging along the said profile by spark-erosion machining with a wire.

Further characteristics and the advantages of the method of manufacture according to the present invention will become clear from the following description of an embodiment thereof, given with reference to an openable link as shown by way of non-limiting example in the appended drawings, in which:

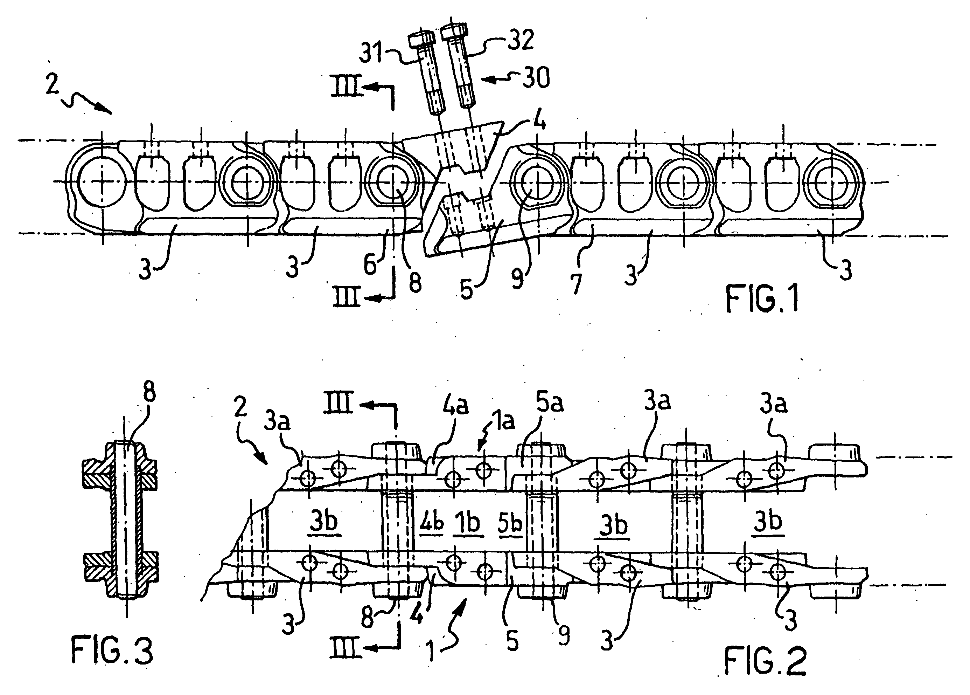

Figure 1 is an elevational view of a detail of a track incorporating an openable link manufactured by a method according to the invention, in the open position,
Figure 2 is a plan view of the detail of Figure 1,
Figure 3 shows a the detail of Figure 2 in a cross-section taken on the line III-III,
Figure 4 is an elevational view of the openable link of Figure 1 in another operating condition and on an enlarged scale,
Figure 5 is a shows the openable link sectioned on the line V-V of Figure 2,
Figure 6 is an elevational view showing, on an enlarged scale, another embodiment of an openable link manufactured by the method according to the invention,

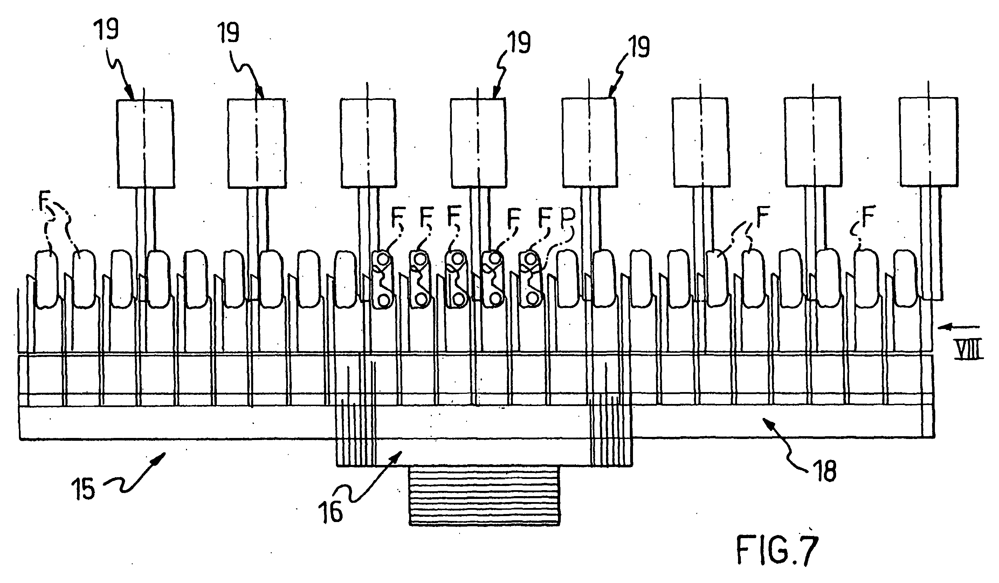

Figure 7 is a plan view of apparatus for implementing the method according to the invention, and

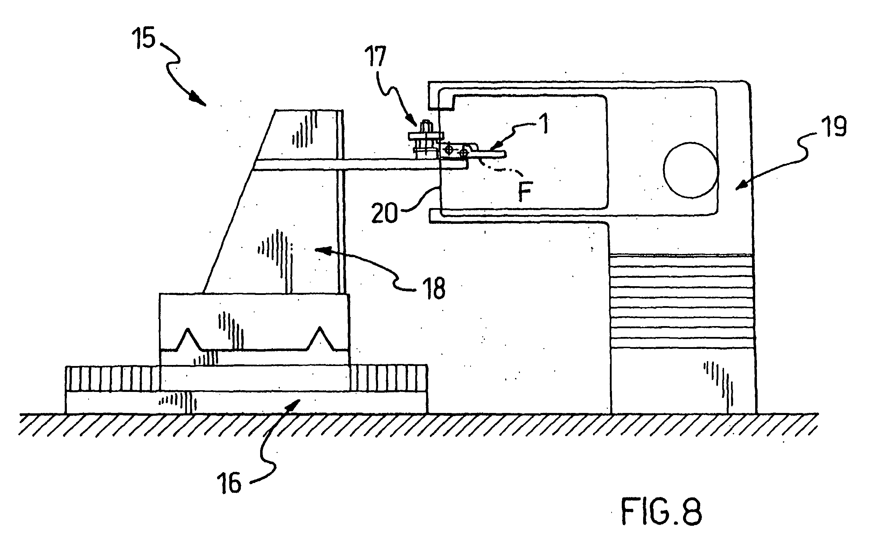

Figure 8 is an elevational view of the apparatus of Figure 7 taken on the arrow VIII, on an enlarged scale.

With reference to the appended drawings, an openable link is generally indicated 1 and is intended to join a chain of links, indicated 2, having a plurality of chain links all indicated 3, into a closed loop to form a track for tractors and the like.

In particular, the openable link 1 comprises two connecting links 4 and 5 articulated, respectively to opposite ends 6 and 7 of the chain of links 2, by means of respective pins 8 and 9.

Naturally, the openable link 1, formed by the connecting links 4 and 5, and the links 3 are right-hand links and connecting links which, together with a left-hand openable link 1a, formed by left-hand connecting links 4a and 5a, and left-hand links 3a, which are spaced from the right-hand links, give rise to a pair 1b of openable links, to pairs 4b and 5b of connecting links, and to pairs 3b of links.

The two connecting links 4 and 5 have respective surfaces 10 and 11 which fit one another along a predetermined profile 12 of known type which, in the embodiment shown, has the shape of a broken line defining, in the two connecting links, substantially trapezium-shaped projections and recesses forming a male and female coupling with one another to produce essentially an interlocking joint.

The two connecting links 4 and 5 are fixed together by connection means 30, for example, bolts 31 and 32 which can be removed in order to open the link 1 according to need. In this connection, the two connecting links 4 and 5 have respective seats 13 and 14 for housing the connection means 30. In the embodiment shown, these seats are formed by two through-holes 13 in the connecting link 4 and by two threaded holes 14 in the connecting link 5.

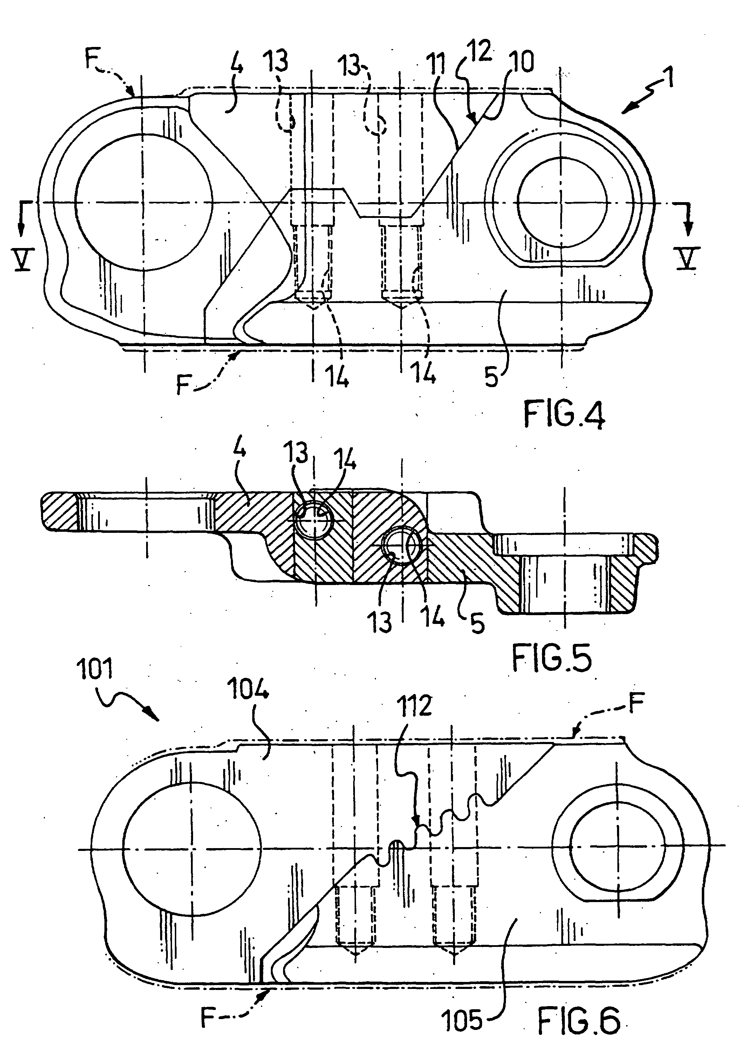

Figure 6 shows an openable link 101 having connecting links 104 and 105 which fit along a predetermined profile 112 of known type, which has a toothed shape, enabling an interlocking joint to be formed between the connecting links.

According to the present invention, a method of manufacturing the link 1 comprises the step of providing a forging F of the openable link in the form of a semi-finished element including the connecting links of the openable link as a single piece and subjecting the forging F to successive operations and, in particular, to suitable mechanical machining to produce the seats 13 and 14 as well as to a cutting operation by means of spark-erosion machining with a wire along the profile 12 to produce, from a single piece, the connecting links 4 and 5 having respective surfaces 10 and 11 which fit one another along the profile 12.

The spark-erosion machining with a wire is carried out with a wire of small diameter no greater than 0.5 mm and preferably selected between 0.2 and 3 mm.

The spark-erosion machining with a wire is advantageously carried out by means of cutting apparatus 15 which comprises, in a frame 16, a plurality of piece-holding tools 17, for example, twenty-four tools arranged at regular intervals, all carried by a single table 18, and each intended to grip one forging F to be cut, as well as a plurality of operating heads 19 for spark-erosion machining with wires, each carrying a wire 20. In the embodiment shown, there are eight heads 19.

The apparatus 15 is completed by a conventional device, not shown in the drawing, for operating and controlling the table 18 in order to move it relative to the heads 19 along a predetermined path P which reproduces the profile 12, to bring about the desired cutting of the forging. In the embodiment shown, this takes place three times in succession with translation by one interval between one cut and the next.

In practice, after the cutting cycle has been repeated three times, the apparatus 15 according to the invention produces twenty-four connecting links 4 and twenty-four connecting links 5, in short, twenty-four openable links 1.

The main advantage of the method according to the present invention is that it enables an openable link to be manufactured with unusual precision. In fact the two connecting links which form the openable link are produced from a single forged piece instead of from two separate and different forged pieces which require the preparation of respective specific moulds.

Moreover, the two connecting links are formed with unusual precision and can be juxtaposed exactly to form the openable link since the profile along which the two respective surfaces are coupled is produced by a single process. In these conditions, the actual profile along which each link is cut could even depart considerably from the theoretical profile, to the benefit of the cost of manufacture, since perfect coupling between connecting links formed from the same forging is in any case ensured.

A further advantage of the method according to the invention is that the openable link also has an improved appearance by virtue of the fact that its complex outer surfaces achieve perfect continuity, without irregularities or steps between the connecting links.

A further advantage of the method according to the invention is that hard and very hard materials, for example manganese steels and the like, can be used for the openable link produced by the method according to the invention. In fact, cutting by spark-erosion machining with a wire proceeds inexorably even with the hardest materials.

A further advantage of the method according to the invention is that it achieves a saving in material both at the forging stage and at the machining stage. In fact the forging relates to a single piece and the spark-erosion machining gives rise to very little or practically no swarf in comparison with machining with tools with the removal of chips.

A further advantage of the openable link produced by the method according to the invention is that it can also be produced with very irregular coupling profiles between the two connecting.links, consequently achieving a strong joint between the connecting links without any particular increase in costs.

Naturally, in order to satisfy contingent and specific requirements, an expert in the art may apply to the above-described method many modifications and variations all of which, however, are included within the scope of protection of the invention as defined by the following claims.

## Claims

1. A method of manufacturing connecting links (4, 5) which can be juxtaposed along a predetermined profile to form an openable link (1) for joining a chain (2) of links (3) into a closed loop to form a track for tractors and the like, **characterized in that** the method comprises the steps of providing a forging (F) of the openable link (1) and cutting the forging (F) along the said profile (12) by spark-erosion machining with a wire.

2. A method according to Claims 1, wherein said method comprises the step of performing on the forging (F) at least one process to produce seats (13, 14) for housing connection means (30) for connecting the connecting links (4,5) to one another.

3. A method according to Claims 1 and 2 or 1 and 3, wherein a chain link forging is selected as the forging (F) of the openable link.

4. Apparatus (15) for manufacturing an openable link (1) for joining a chain (2) of links (3) into a closed loop to form a track for tractors and the like, **characterized in that** the apparatus comprises a plurality of piece-holder tools (17), each for housing a forging (F) of the openable link (1), and a plurality of operating heads (19) for spark-erosion machining with wires movable relative thereto along a predetermined path (P).

5. A connecting link (4, 5) of an openable link (1) for closing a chain (2) of links (3) into a closed loop to form a track for tractors and the like, **characterized in that** the connecting link comprises a surface (10, 11) which can be placed beside a surface (11, 10) of another connecting link (5, 4), the surface (10, 11) being produced by spark-erosion machining with a wire from a single forged piece according to the method of anyone of the claims 1 - 3.

6. An openable link (1) for joining a chain (2) of links (3) into a closed loop to form a track for tractors and the like, wherein the openable link comprises two connecting links according to claim 5 juxtaposed along the profile (12).

## Patentansprüche

1. Verfahren zur Herstellung von Verbindungsgliedern (4, 5), die nebeneinander entlang eines vorbestimmten Profils angeordnet sein können, um ein zu öffnendes Glied (1) zum Zusammenfügen einer Kette (2) aus Gliedern (3) zu einer geschlossenen Schleife zu bilden, um eine Gleiskette für Traktoren oder dergleichen zu bilden, **dadurch gekennzeichnet, dass** das Verfahren die Schritte umfasst: Vorsehen eines Schmiedestücks (F) des zu öffnenden Glieds (1) und Schneiden des Schmiedestücks (F) entlang des Profils (12) durch elektro-erosive Bearbeitung mit einem Draht.

2. Verfahren nach Anspruch 1, wobei das Verfahren den Schritt umfasst: Durchführen zumindest eines Vorgangs am Schmiedestück (F), um Aufnahmen (13, 14) zum Unterbringen von Verbindungseinrichtungen (30) zum Verbinden der Verbindungsglieder (4, 5) miteinander herzustellen.

3. Verfahren nach Anspruch 1 und 2 oder 1, wobei ein Kettenglied-Schmiedstück als das Schmiedestück (F) des zu öffnenden Gliedes gewählt wird.

4. Vorrichtung (15) zum Herstellen eines zu öffnenden Gliedes (1) zum Zusammenfügen einer Kette (2) von Gliedern (3) zu einer geschlossenen Schleife, um eine Gleiskette für Traktoren und dergleichen zu bilden, **dadurch gekennzeichnet, dass** die Vorrichtung eine Vielzahl von Teilehalter-Werkzeugen (17), jedes zum Unterbringen eines Schmiedestücks (F) des zu öffnenden Gliedes (1), und eine Vielzahl von Bearbeitungsköpfen (19) zur elektro-erosiven Bearbeitung mit Drähten, die relativ dazu entlang eines vorbestimmten Pfades (P) beweglich sind, umfasst.

5. Verbindungsglied (4, 5) eines zu öffnenden Gliedes (1) zum Schließen einer Kette (2) aus Gliedern (3) zu einer geschlossenen Schleife, um eine Gleiskette für Traktoren und dergleichen zu bilden, **dadurch gekennzeichnet, dass** das Verbindungsglied eine Oberfläche (10, 11) aufweist, die neben einer Oberfläche (11, 10) eines weiteren Verbindungsgliedes (5, 4) angeordnet sein kann, wobei die Oberfläche (10, 11) durch elektro-erosive Bearbeitung mit einem Draht aus einem einzelnen geschmiedeten Teil gemäß dem Verfahren nach einem der Ansprüche 1 bis 3 hergestellt wird.

6. Zu öffnendes Glied (1) zum Zusammenfügen einer Kette (2) aus Gliedern (3) zu einer geschlossenen Schleife, um eine Gleiskette für Traktoren und dergleichen zu bilden, wobei das zu öffnende Glied zwei Verbindungsglieder gemäß Anspruch 5 umfasst, die entlang des Profils (12) nebeneinander liegen.

## Revendications

1. Procédé de fabrication de maillons de jonction (4, 5) que l'on peut juxtaposer le long d'un profil prédéterminé pour former un maillon ouvrable (1) pour raccorder une chaîne (2) de maillons (3) dans une boucle fermée pour former une chenille pour des tracteurs et similaires, **caractérisé en ce que** le procédé comprend les étapes de fourniture d'une pièce forgée (F) du maillon ouvrable (1) et le découpage de la pièce forgée (F) le long dudit profil (12) par usinage par étincelage avec un fil.

2. Procédé selon la revendication 1, dans lequel ledit procédé comprend l'étape de réalisation sur la pièce forgée (F) d'au moins un processus pour produire des appuis (13, 14) pour loger le moyen de jonction (30) pour joindre les maillons de jonction (4, 5) l'un à l'autre.

3. Procédé selon la revendication 1 et 2 ou 1 et 3, dans lequel on choisit un maillon de chaîne forgé comme pièce forgée (F) du maillon ouvrable.

4. Dispositif (15) pour fabriquer un maillon ouvrable (1) pour raccorder une chaîne (2) de maillons (3) dans une boucle fermée pour former une chenille pour des tracteurs ou similaires, **caractérisé en ce que** le dispositif comprend une pluralité d'outils porteurs de pièces (17), chacun pour loger une pièce forgée (F) du maillon ouvrable (1), et une pluralité de têtes de fonctionnement (19) pour un usinage par étincelage avec des fils déplaçables sur celles-ci le long d'un chemin prédéterminé (P).

5. Maillon de jonction (4, 5) d'un maillon ouvrable (1) pour fermer une chaîne (2) de maillons (3) dans une boucle fermée pour former une chenille pour des tracteurs et similaires, **caractérisé en ce que** le maillon de jonction comprend une surface (10, 11) que l'on peut placer à côté d'une surface (11, 10) d'un autre maillon de jonction (5, 4), la surface (10, 11) qui est produite par usinage par étincelage avec un fil à partir d'une seule pièce forgée selon le procédé de l'une quelconque des revendications 1 à 3.

6. Maillon ouvrable (1) pour raccorder une chaîne (2) de maillons (3) dans une boucle fermée pour former une chenille pour des tracteurs et similaires, dans lequel le maillon ouvrable comprend deux maillons de jonction selon la revendication 5, juxtaposés le long du profil (12).
